# FASCICULE DE BREVET EUROPEEN

(11) **EP 2 149 290 B1**
(45) Date de publication et mention de la délivrance du brevet: **15.06.2011**
(21) Numéro de dépôt: 09358003.3
(22) Date de dépôt: 30.07.2009
(51) Int. Cl.: A01D 46/28

(54) **Secoueur à raideur réglable pour machines de récolte et machines de récolte faisant application de tels secoueurs**
Schüttler mit regulierbarer Stärke für Erntemaschinen und Erntemaschinen, bei denen solche Schüttler zum Einsatz kommen
Shaker with adjustable spring rate for harvesting machines and harvesting machines using such shakers

(30) Priorité: 01.08.2008 FR 0804409
(43) Date de publication de la demande: 03.02.2010
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR)
(74) Mandataire: Marek, Pierre

(56) Documents cités:
- FR-A- 2 639 177
- FR-A- 2 651 408
- FR-A- 2 654 575
- FR-A- 2 668 025
- FR-A- 2 768 016
- FR-A- 2 813 493

## Description

La présente invention concerne un secoueur ou bras cueilleur à raideur réglable, pour machines de récolte, en particulier pour machines à vendanger, du genre comportant deux ensembles de détachement des baies placés en vis-à-vis et comportant, chacun, une pluralité de secoueurs ou bras cueilleurs superposés. L'invention s'applique également aux machines de récolte et en particulier aux machines à vendanger du genre susmentionné faisant application de tels secoueurs. Elle vise aussi un dispositif de débrayage permettant de neutraliser un ou plusieurs secoueur(s) de chacun des deux ensembles de la tête de secouage des machines.

Aujourd'hui, le monde de la viticulture est en perpétuelle recherche de solutions afin d'améliorer les différents systèmes de récolte des machines à vendanger.

Depuis quelques décennies, de nombreuses solutions ont été proposées aux viticulteurs qui procèdent à une vendange mécanique, ou à ceux qui vendangeaient à la main et qui se sont mécanisés, étant donné le niveau de qualité de récolte obtenu par les machines à vendanger modernes.

Cependant, la qualité de la vendange obtenue par une machine à vendanger reste encore très aléatoire et dépend de plusieurs paramètres, notamment de paramètres humains d'appréciation et de paramètres mécaniques de performance des systèmes qui composent une tête de récolte de machine à vendanger.

En ce qui concerne les paramètres humains, beaucoup de progrès ont été faits au niveau de l'ergonomie des commandes de réglage de la partie récolte de la machine à vendanger. Pour la partie réglage de la tête de récolte, on peut considérer trois principaux ensembles distincts : la partie secouage de la vigne, la partie convoyage de la vendange et la partie nettoyage de la vendange. Ces accès ergonomiques aux divers réglages d'une tête de récolte de machine à vendanger, permettent aux viticulteurs d'appréhender beaucoup plus facilement les réglages, afin d'obtenir les meilleurs résultats qualitatifs de la récolte.

En ce qui concerne les paramètres mécaniques de performances, beaucoup de progrès ont aussi été faits sur les trois parties décrites ci-dessus et plus particulièrement sur les systèmes de secouage de la vigne.

Le système de secouage de la vigne est, de loin, la partie la plus importante d'une tête de récolte de machine à vendanger.

En effet, on comprend très bien que, sur une tête de récolte, une partie des systèmes servent à corriger l'insuffisance de qualité générée par les autres systèmes. Par exemple : le système de nettoyage de la vendange doit être d'autant plus performant que le système de secouage l'est moins étant donné qu'il génère énormément de feuilles et de débris de végétaux de toutes sortes qu'il faut éliminer.

On connaît actuellement plusieurs systèmes de secouage pour machines de récolte, telles que machines à vendanger.

Le plus ancien et le plus simple de ces systèmes utilise des batteurs constitués par de simples tiges flexibles généralement fabriquées en fibre de verre, et, fixées à l'une de leurs extrémités sur un arbre de secouage animé angulairement et alternativement par un système bielle-manivelle mécanique (voir par exemple FR-2.509.955, FR-2.554.673, FR-2.437.769).

Ce système quasiment abandonné avait pour avantages d'être très simple et de pouvoir être légèrement réglable. En effet, si l'on souhaitait régler la fixation à l'encastrement, cela était possible, mais la contrepartie était que l'amplitude au bout du batteur diminuait énormément, ce qui n'était guère acceptable car cela réduisait considérablement les performances de vitesse d'évolution de la machine à vendanger dans la vigne et, de ce fait, n'avait aucune utilité.

D'autre part, ce système de batteurs avec une fixation à une seule extrémité de la tige de « battage » avait pour très gros inconvénient le fait de transmettre à la végétation des coups, du type flagellation, connu sous le nom de phénomène d'affolement dans les milieux professionnels concernés.

Ce phénomène d'affolement résulte du rapport qui existe entre la raideur du batteur et son inertie spécifique dont découle une fréquence propre de fonctionnement plus ou moins importante et qui doit, si possible, être la plus éloignée des fréquences de fonctionnement du secouage et, de préférence bien au dessus. Ce qui n'était pas le cas de ce type de batteur.

Cette fréquence est comprise généralement entre 450 et 600 coups par minute, soit 7,5 à 10 Hz.

Aujourd'hui, étant donné ses multiples inconvénients, ce système n'est plus utilisé sur les machines à vendanger modernes.

Actuellement, le plus courant des systèmes de secouage fait appel à des « secoueurs » (par exemple, FR-2.638.602, FR-2.768.016). Un tel système fonctionne selon les mêmes principes que le précédent, sauf qu'il est animé à l'aide de deux arbres de secouage de chaque côté, le tout étant animé du même type de commande à bielle-manivelle mécanique. La différence majeure qui existe entre le secoueur et le batteur, est que le batteur est fixé à une seule extrémité et que le secoueur est fixé lui aux deux extrémités étant donné sa forme générale en trombone. Cette forme de trombone lui confère un avantage par rapport à l'ancien système de batteur.

Effectivement, le fait d'avoir une double fixation permet au système de secoueur d'évoluer en générant un phénomène d'affolement beaucoup moins nuisible que celui produit par le système de batteur décrit précédemment.

En effet, le rapport raideur et inertie est nettement plus favorable que celui obtenu avec le système de batteurs, ce qui permet un meilleur contrôle de celui-ci et donc une possibilité de réglage, notamment en fréquence, plus importante. On comprend très bien que plus la fréquence est élevée, plus le secoueur doit être raide afin d'avoir une fréquence propre plus élevée que la fréquence d'utilisation. Le fait de pouvoir augmenter les fréquences de secouage permet aux machines à vendanger, équipées d'un système de récolte à secoueurs, d'évoluer beaucoup plus vite que les machines à vendanger équipées d'un système de récolte à batteurs.

Sur certaines machines à vendanger, les systèmes de secoueurs peuvent être légèrement réglables de la même manière que les systèmes de batteurs précédemment décrits. En effet, de la même façon que les batteurs, il est possible de fixer les deux extrémités du secoueur à une position d'encastrement plus ou moins éloignées de l'axe de rotation de l'arbre de secouage afin d'en faire varier la raideur à la flexion. Cela dit, comme pour les batteurs, ce réglage a pour effet nuisible de modifier l'amplitude de celui-ci, et donc de ralentir considérablement la vitesse de récolte de la machine. C'est pour cela que beaucoup d'utilisateurs, voire la totalité, n'utilisent pas du tout cette possibilité de réglage, car trop difficile à évaluer et à maîtriser.

Le système de récolte par secoueurs est aujourd'hui classique et l'un des plus utilisé sur les machines à vendanger modernes.

Un autre système de secouage complexe est par exemple décrit dans les documents FR-2 605 487, FR-2 789 262 et FR-2 813 493.

Le système de secouage décrit dans ces documents comporte des secoueurs constitués par des tiges flexibles courbées en forme d'arc et dont les deux extrémités sont reliées à un support. Un moyen permet de faire varier la courbure de ces tiges.

A cet effet, l'une des extrémités de chaque tige flexible est rattachée, au moyen d'une articulation, à un organe fixe de la machine, tandis que son extrémité opposée est rattachée à un point mobile dans une direction parallèle à l'axe longitudinal de la machine, par l'intermédiaire de biellettes ou autre système de transmission articulée.

Un tel système se rapproche d'un système de secouage de type à batteurs, sauf qu'à l'extrémité arrière des secoueurs, est prévue une fixation pivot avec biellette d'accompagnement du mouvement résiduel avant et arrière. Cette fixation sur biellette arrière a pour avantage de supprimer les inconvénients d'affolement énoncés précédemment des systèmes de secouage à batteurs. Par contre, ce système a pour inconvénient sa grande complexité ainsi que le fait de faire travailler le secoueur en déformation permanente. Cette déformation permanente oblige à avoir un secoueur de très grande résistance et donc de section plus importante que le secoueur classique. Le fait d'avoir un secoueur de plus grande section entraîne des inerties en mouvement de plus grande importance. C'est pour cela que ce type de secouage est généralement suspendu de façon pendulaire dans la tête de récolte.

Ce système a de plus pour inconvénient, de nécessiter l'utilisation d'un très grand nombre de pièces mécaniques rendant le démontage des secoueurs plus laborieux que celui d'un système classique.

C'est essentiellement à cause de la complexité de démontage et de réinstallation des secoueurs, qu'il a été proposé un système de verrouillage et déverrouillage desdits secoueurs, afin d'éviter leur démontage au cas où le nombre de secoueurs montés soit plus important que nécessaire, par rapport à la hauteur de la zone fructifère à vendanger (FR-2 813 493), ce système de verrouillage et déverrouillage complexifie encore plus le système de fixation des secoueurs, ce qui ne va pas dans le bon sens de la simplification mécanique et l'allégement des inerties des pièces en mouvement qui est l'ennemi des systèmes vibratoires.

Le système décrit dans les documents FR-2 605 487, FR-2 789 262 et FR-2 813 493 a pour avantage sa puissance. En effet, étant donné le nombre de pièces en mouvement et sa grande inertie le système est pourvu d'une grande réserve d'énergie cinétique, ce qui est un avantage quand on veut avancer vite et taper fort, surtout lorsque les vignes sont difficiles. Par contre, quand les vignes sont fragiles, cet avantage se transforme en inconvénient majeur étant donné la raideur très importante des secoueurs.

On connaît enfin un dispositif de secouage pour machines à vendanger comportant une pluralité de secoueurs. Chacun de ces secoueurs est constitué par une tige souple repliée sur elle-même d'environ 180° en ayant une forme analogue à celle d'une épingle à cheveux, les deux branches de la tige ayant pratiquement la même longueur, l'extrémité de l'une des branches de cette tige étant reliée à un arbre moteur, tandis que l'extrémité de l'autre branche de ladite tige est reliée, soit rigidement à un élément fixe du châssis de la machine (FR-2.639.177), soit avec une possibilité de mouvement (FR-2.651.408 et FR-2.668.025) à un organe support.

La branche des secoueurs qui est tournée vers la végétation lorsque ces derniers sont installés dans le tunnel d'une tête de récolte de machine à vendanger, c'est-à-dire la branche qui est reliée à l'arbre moteur, est enrobée dans une gaine de protection réalisée dans une matière souple (FR-2.639.177 et FR-2.651.408).

Cette gaine de protection souple permet d'atténuer les effets dommageables générés par les chocs desdits secoueurs sur les fruits et la végétation des haies fruitières, en cours de récolte. Elle n'a, par contre, aucune influence sur le degré de raideur ou flexibilité de la tige de secouage qui reste le même, que ladite tige de secouage soit revêtue ou non d'une gaine de protection souple. La gaine de protection souple entourant la tige de secouage ne permet donc pas de régler le degré de raideur ou flexibilité de cette tige. En outre, elle est montée fixement sur la tige de secouage le long de laquelle elle ne peut être déplacée en fonction des caractéristiques des vignes à traiter (végétation, cépages, degré de maturité, ... ).

La présente invention se propose d'apporter des solutions aux problèmes découlant des inconvénients susmentionnés des différents systèmes de secouage présentés aux utilisateurs de machines à vendanger.

Selon une première disposition caractéristique, le bras de récolte ou secoueur flexible selon l'invention présente la forme générale d'une épingle à cheveux constituée de deux branches se raccordant par une portion courbe, l'extrémité de l'une de ces branches ou branche d'animation étant destinée à être reliée à un système d'actionnement, tandis que l'extrémité de l'autre desdites branches constituant la partie active du secoueur est destinée à être rattachée à un support fixe, ledit secoueur étant plus spécialement remarquable en ce que la branche d'animation est munie d'un moyen permettant de modifier le degré de raideur ou flexibilité de celle-ci sur au moins une portion de sa longueur et, de la sorte, de régler le degré de raideur ou flexibilité de l'ensemble du secoueur.

Selon un mode d'exécution avantageux, le moyen permettant de régler la raideur ou flexibilité de la branche d'animation sur au moins une portion de sa longueur, comprend, d'une part, au moins une tige de rigidification et, de préférence, deux tiges de rigidification s'étendant parallèlement à cette dernière à partir d'un emplacement proche de l'extrémité de fixation de ladite branche d'animation , et, d'autre part, un organe d'assemblage mobile permettant de relier rigidement la ou les tiges de rigidification à ladite branche d'animation, en un emplacement variable de celle-ci.

Selon un mode d'exécution préféré, les tiges de rigidification sont respectivement disposées au-dessus et au-dessous de la branche d'animation du secoueur, en considérant la position de montage de ce dernier dans les ensembles de récolte des machines à vendanger.

De préférence, la ou les tiges de rigidification sont formées d'une seule pièce avec le secoueur.

Selon un mode d'exécution intéressant, l'organe de rigidification mobile est constitué par une bride montée avec une aptitude de déplacement le long de la branche d'animation et de la ou des tiges de rigidification, ladite bride étant réalisée en deux parties assemblées à l'aide d'organes de serrage, par exemple au moyen de boulons.

On conçoit que l'invention permet de régler la raideur ou flexibilité des secoueurs ou bras de récolte d'un ensemble de secouage de machines de récolte telles que machines à vendanger, sans modifier leur amplitude d'animation, et ce directement sur ceux-ci et sans pièces interposées entre leur support d'animation (arbre de secouage) et le secoueur lui-même.

Elle offre, en outre, la possibilité de procéder à des réglages précis de la raideur ou flexibilité des secoueurs, de manière simple, rapide et ergonomique, sans utilisation d'outils particuliers, l'utilisateur de la machine à vendanger pouvant aisément adapter le système de secouage de celle-ci à toutes les situations de vendange mécanique de la vigne, que ce soient des vignes difficiles qui demandent des secoueurs d'une grande raideur, ou que ce soient des vignes fragiles ou anciennes qui nécessitent une raideur beaucoup plus souple afin de les préserver d'un stress mécanique trop important qui est générateur de débris de feuilles et de bois de sarments de toutes sortes.

Chaque ensemble de secouage des machines à vendanger étant constitué d'une pluralité de bras de récolte ou secoueurs espacés verticalement, il arrive souvent que leur nombre soit trop important par rapport à la hauteur de la zone fructifère des pieds de vigne qui doivent être vendangés, selon le mode de conduite des parcelles de vigne, de sorte qu'en cours de récolte un ou plusieurs secoueurs desdits ensembles demeurent inactifs tout en restant animés par leur dispositif d'actionnement.

Pour écarter le démontage des secoueurs inutilisés et leur remontage lorsque cela redevient souhaitable, ce qui constitue des interventions longues et malaisées, on a proposé (FR-2 813 493), un système de débrayage des secoueurs non utilisés.

Toutefois, ce système de secoueurs débrayables a pour inconvénient de rendre encore plus complexe le système de fixation des secoueurs, ce qui ne va pas dans le bon sens de la simplification mécanique et de l'allégement de l'inertie des pièces en mouvement qui est l'ennemie des systèmes vibratoires, comme indiqué précédemment.

Un autre objectif de l'invention est de permettre de rendre inactifs un ou plusieurs secoueurs de chaque ensemble de secouage, tout en restant fixés au châssis de la tête de récolte de la machine et animés par les arbres de secouage de ladite tête de récolte.

Dans ce but, le châssis de la tête de récolte de la machine est muni, de part et d'autre du plan médian longitudinal de ladite tête de récolte, d'éléments de neutralisation permettant d'établir une liaison rigide dissociable entre ledit châssis et la branche d'animation d'un ou plusieurs secoueurs de chaque ensemble de secouage.

Selon un mode d'exécution préféré, l'élément de neutralisation et la bride de réglage de raideur sont conformés et agencés de sorte à permettre leur liaison détachable, au moyen d'au moins un organe de fixation.

Selon un mode d'exécution avantageux, la branche d'animation du secoueur est munie d'au moins un ergot de butée disposé à proximité de la portion courbe dudit secoueur et contre lequel peut être amenée et calée la bride de réglage de raideur.

Selon un autre mode d'exécution avantageux, l'élément de neutralisation est monté avec une aptitude de pivotement sur un axe fixe et il peut être placé dans une position inactive selon laquelle il se trouve écarté du secoueur ou dans une position active suivant laquelle il se trouve rattaché à la branche d'animation dudit secoueur.

On conçoit que l'invention permet de rendre inactifs un ou plusieurs secoueurs de chaque ensemble de secouage, sans nécessité de procéder à leur démontage, dans le cas où le nombre de secoueurs fixés sur les arbres de secouage de la machine à vendanger s'avère trop important par rapport à la hauteur de la zone fructifère de la vigne à récolter.

Selon un autre mode d'exécution préféré, l'élément de neutralisation est constitué par une platine de forme approximativement triangulaire (en forme de palme) et le bord de cette platine opposé à son axe de montage est pourvu d'une pluralité de trous de fixation espacés disposés à des distances variables dudit axe de montage de ladite platine de neutralisation sur le bâti de l'ensemble de secouage.

On comprend que ce mode d'exécution permet de rendre inactifs les secoueurs inutiles, à l'aide du même dispositif servant à régler la raideur de chaque secoueur de la tête de récolte. Il permet de régler l'espace ménagé entre les branches actives des secoueurs rendus inactifs, afin de laisser le passage de la végétation et des piquets de palissage qui peuvent présenter différentes tailles, selon les plantations.

Dans le document FR-2 768 016, est décrit un système de secouage constitué de deux ensembles disposés en vis-à-vis et, comportant, chacun, une pluralité de bras de récolte ou secoueurs superposés et au-dessus duquel est monté un dispositif de détection de piquets. Ce dispositif comprend deux tiges de détection fixées en regard l'une de l'autre, avec un espacement, sur deux éléments fixés se faisant face du bâti du système de secouage, par l'intermédiaire de supports, les supports soutenant l'extrémité avant desdites tiges de détection étant équipés de détecteurs de chocs (par exemple d'accéléromètres) et étant fixés audit bâti par l'intermédiaire de silentblocs ®.

Un autre objectif est de simplifier le montage d'un tel dispositif de détection de piquets, en supprimant l'utilisation de pièces spécifiques, en l'occurrence les tiges de détection particulières et leur mode de fixation spécial sur le bâti du système de secouage.

Selon l'invention, un détecteur de chocs (par exemple un accéléromètre) est monté à l'extrémité ou à proximité de l'extrémité avant de la branche active d'au moins l'un des secoueurs de chaque ensemble de secouage, de préférence sur le secoueur supérieur de chaque ensemble.

Le montage de ces détecteurs de chocs ne nécessite l'utilisation d'aucune pièce importante spéciale dédiée à cette fonction.

Le détecteur de chocs, par exemple constitué par un accéléromètre est directement positionné sur la branche active des secoueurs, et peut remplir efficacement sa fonction, même lorsque les secoueurs équipés d'un tel détecteur ne sont pas neutralisés et donc mobiles.

Les buts, caractéristiques et avantages ci-dessus, et d'autres encore, ressortiront mieux de la description qui suit et des dessins annexés dans lesquels :
La figure 1 est une vue en perspective simplifiée, avec arrachement partiel, d'un exemple de réalisation de machine de récolte de baies à laquelle peut être appliquée l'invention.
La figure 2 est une vue en perspective simplifiée, à caractère schématique et à échelle agrandie, d'un dispositif de secouage de machine à vendanger comportant des secoueurs à raideur réglable selon l'invention.

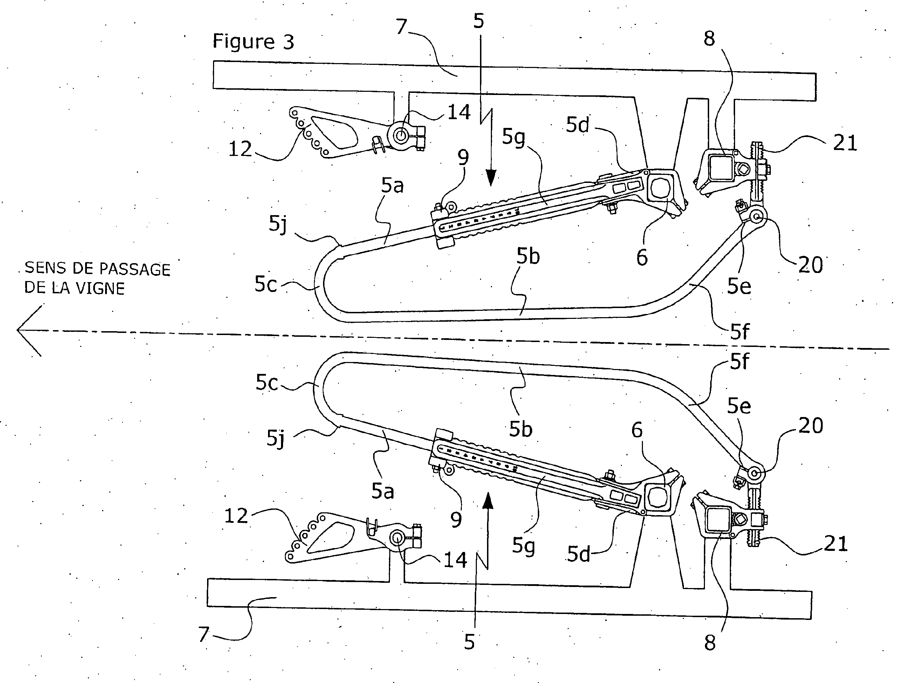

La figure 3 est une vue en plan, à caractère schématique, d'un couple de secoueurs disposés en vis-à-vis.

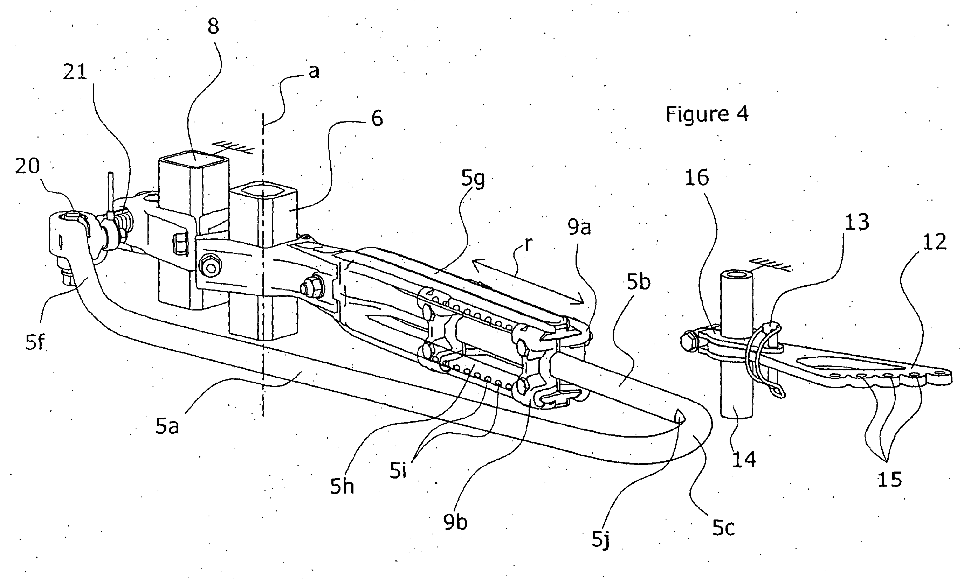

La figure 4 est une vue en perspective éclatée, d'un secoueur et de son dispositif de neutralisation représentés en position de fixation sur leurs supports verticaux respectifs.
Les figures 5 et 6, sont des vues en plan illustrant la modification de la raideur d'un secoueur obtenue par la mise en oeuvre de l'invention.
La figure 7A est une vue de détail et de côté, montrant deux positions de réglage de raideur possibles de la bride de liaison sur la branche d'animation d'un secoueur.
La figure 7B est une vue en coupe transversale selon la ligne 7-7 de la figure 7A.
La figure 8 est une vue en perspective d'un secoueur et de son dispositif de neutralisation.
La figure 9 est une vue en plan de ce dispositif.
Les figures 10 et 11 illustrent un premier réglage correspondant à une ouverture zéro, la figure 10 montrant les secoueurs 5 en situation statique, tandis que la figure 11 représente lesdits secoueurs en situation dynamique.
Les figures 12 et 13 sont des vues analogues aux figures 10 et 11, respectivement, et illustrant un exemple de réglage intermédiaire correspondant à une ouverture moyenne permettant le passage de piquets de vigne (v) de grosseur moyenne.
Les figures 14 et 15 sont également des vues analogues aux figures 10 et 11, respectivement, et illustrant une troisième possibilité de réglage correspondant à une ouverture maximum permettant le passage de piquets de vigne (v) de grosse section.

On se reporte auxdits dessins pour décrire un exemple intéressant, bien que nullement limitatif, de réalisation du secoueur à raideur réglable et d'une machine de récolte de baies selon l'invention.

Afin de ne pas compliquer inutilement l'exposé de l'invention, on a représenté sur les dessins annexés et on décrit ci-après en détail, seulement le secoueur à raideur réglable et ses caractéristiques complémentaires de mise en oeuvre, étant entendu que les autres parties de la machine faisant application de tels secoueurs (bâti, motorisation, convoyeurs de vendanges, bennes de réception, etc.) n'entrent pas dans le cadre de la présente invention et peuvent être exécutées de la façon habituelle bien connue de l'homme de l'art.

D'autre part, si l'on décrit ci-après une application particulièrement intéressante de l'invention à une machine à vendanger désignant habituellement une machine de récolte du raisin, il est évident qu'elle est aussi applicable à d'autres machines de récolte de baies produites par des arbustes fruitiers plantés en lignes, telles que, par exemple : cassis, olives, framboises, groseilles, cerises du caféier, etc.

On précise que dans la description et dans les revendications, le terme « raideur » doit être considéré comme l'équivalent du mot « flexibilité ».

On souligne encore que l'emploi de mots tels que « supérieure », « inférieure », « avant », « arrière » dans la description qui suit et dans les revendications, se réfère à la position théorique et à la direction d'évolution normale de la machine, en cours de travail.

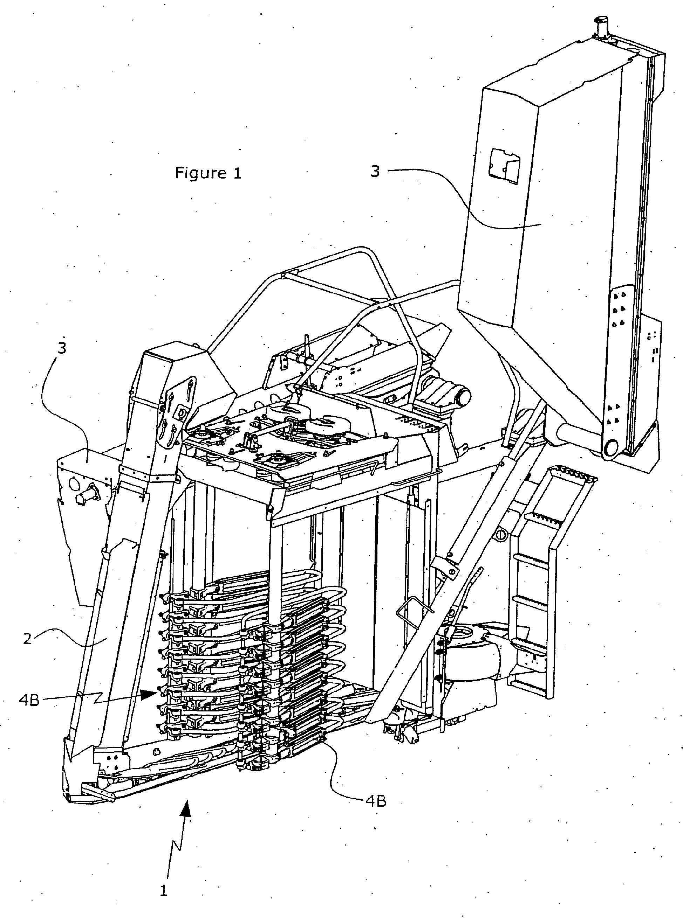

Sur la figure 1, est représentée, de manière simplifiée, une machine à vendanger comprenant, de façon connue en soi, un châssis en forme de portique, une tête de récolte 1 portée par ledit châssis et comportant deux ensembles de secouage se faisant face, deux systèmes de convoyage 2 pour la réception et l'acheminement de la vendange jusqu'à deux bennes de réception 3 installées latéralement et en partie haute du châssis. Ce dernier est équipé de roues (non représentées) et la machine comporte encore une motorisation et des systèmes de régulation (également non représentés) permettant, respectivement, l'entraînement et le contrôle du fonctionnement de ses différents organes actifs.

La tête de récolte 1 est installée, de préférence de manière amovible, à l'intérieur du portique ou tunnel constitué par le châssis de la machine.

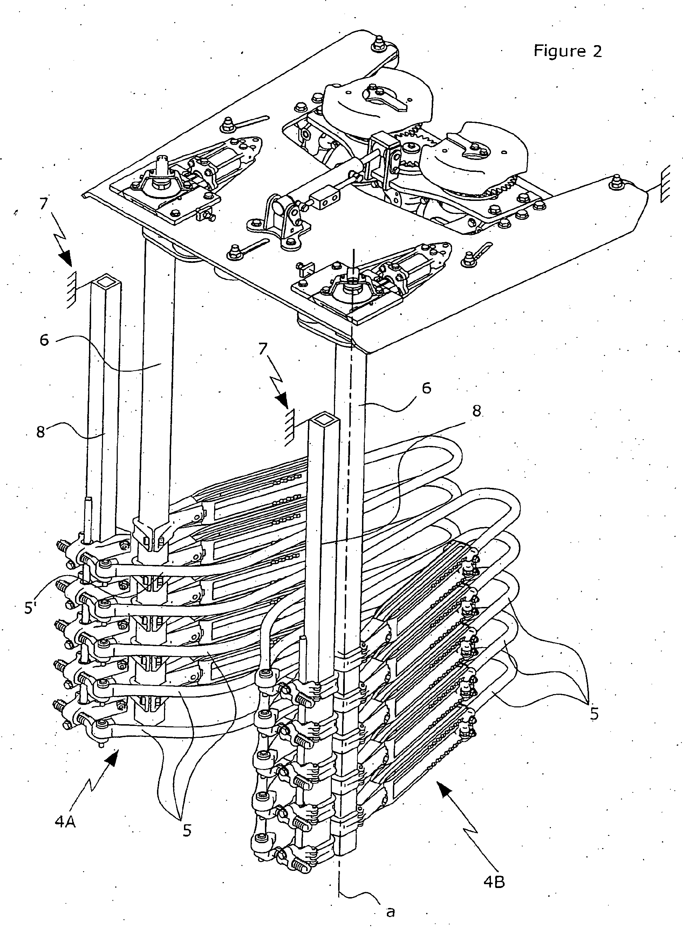

Elle comprend essentiellement (figure 2) un système de secouage constitué de deux ensembles de détachement des baies 4A et 4B montés en vis-à-vis et comportant, chacun, une pluralité de bras cueilleurs ou secoueurs superposés 5. Ces secoueurs espacés verticalement sont constitués par des barreaux flexibles fixés, par l'intermédiaire de leurs extrémités, d'une part, à un premier arbre vertical 6 monté avec une aptitude d'oscillation autour de son axe longitudinal a, sur le bâti 7 du système de secouage, et, d'autre part, à un deuxième arbre vertical 8 qui est, de préférence, fixe par rapport audit bâti 7, mais qui pourrait être installé avec une aptitude d'oscillation motorisée ou monté fou. Généralement, les secoueurs superposés 5 de chaque ensemble de secouage 4A, 4B sont légèrement décalés verticalement par rapport aux secoueurs de l'autre ensemble de secouage disposé en vis-à-vis.

Selon une première disposition caractéristique de l'invention, les secoueurs 5 présentent la forme générale d'une épingle à cheveux constituée de deux branches 5a, 5b légèrement divergentes se raccordant par une portion courbe 5c, l'extrémité 5d de l'une de ces branches ou branche d'animation 5a étant destinée à être reliée à un système d'actionnement, tandis que l'extrémité 5e de l'autre 5b desdites branches constituant la branche active du secoueur étant destinée à être rattachée à un support fixe. Ces secoueurs flexibles sont exécutés dans un matériau semi-rigide, par exemple en polyamide ou autre matière présentant des caractéristiques similaires de flexibilité et de résistance à la flexion (par exemple : polyester, fibre de verre, etc.).

La branche active 5b a une longueur supérieure à la longueur de la branche d'animation 5a et elle présente une portion extrême 5f courbée en direction de l'axe y de ladite branche d'animation.

La branche d'animation 5a est munie d'un moyen permettant de modifier la longueur de sa portion flexible et, de la sorte, de régler le degré de raideur ou flexibilité de l'ensemble du secoueur. Autrement dit, ce moyen permet la rigidification de la branche d'animation 5a, sur au moins une portion de sa longueur.

Selon le mode d'exécution avantageux illustré, ce moyen comprend, d'une part, au moins une tige de rigidification et, de préférence, deux tiges de rigidification 5g, 5h, s'étendant parallèlement à la branche d'animation 5a à partir d'un emplacement proche de l'extrémité de fixation 5d de celle-ci, et, d'autre part, un organe d'assemblage mobile 9 permettant de relier rigidement la ou lesdites tiges de ridification 5g, 5h, à ladite branche d'animation 5a, en un emplacement variable de celle-ci. De la sorte, la branche d'animation peut comporter une portion rigide de longueur variable s'étendant de son extrémité de fixation 5d à l'emplacement de l'organe d'assemblage 9 et une portion flexible de longueur variable s'étendant dudit organe d'assemblage 9 à la portion courbe 5c du secoueur.

De préférence, les tiges de rigidification 5g, 5h présentent une section aplatie et sont formées d'une seule pièce avec le secoueur proprement dit et ces tiges de rigidification sont respectivement disposées au-dessus et au-dessous de la portion flexible de la branche d'animation 5a du secoueur, en considérant la position de montage de ce dernier dans les ensembles de secouage des machines à vendanger.

Selon un mode d'exécution avantageux, l'organe de rigidification mobile 9 est constitué par une bride montée avec une aptitude de déplacement le long de la branche d'animation 5a et de la ou les tiges de rigidification 5g, 5h, ladite bride étant réalisée en deux parties 9a, 9b assemblées à l'aide d'organes de serrage, par exemple au moyen de boulons 10.

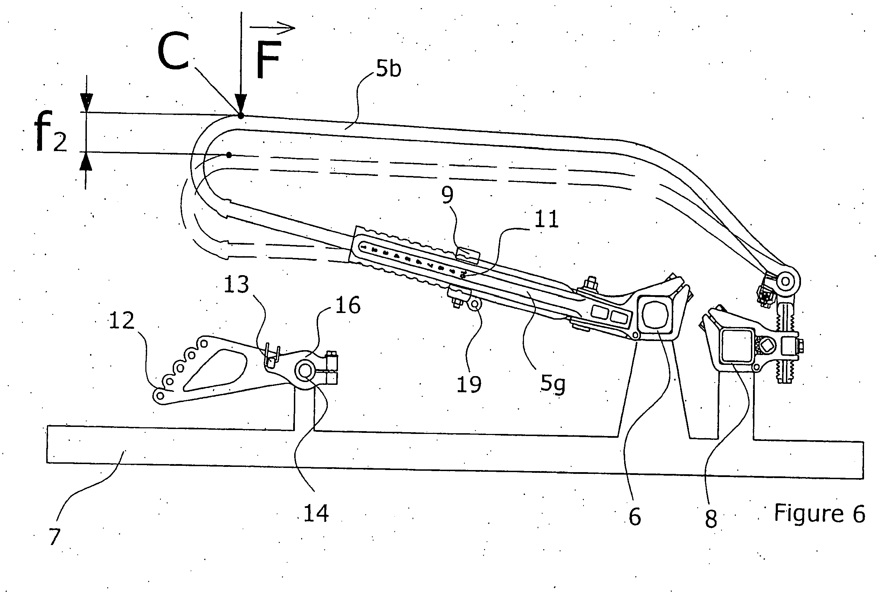

Pour faciliter les réglages de la raideur des secoueurs, la tige de rigidification supérieure 5g peut comporter une graduation 11 répartie sur sa face supérieure (figure 6) et le long de celle-ci.

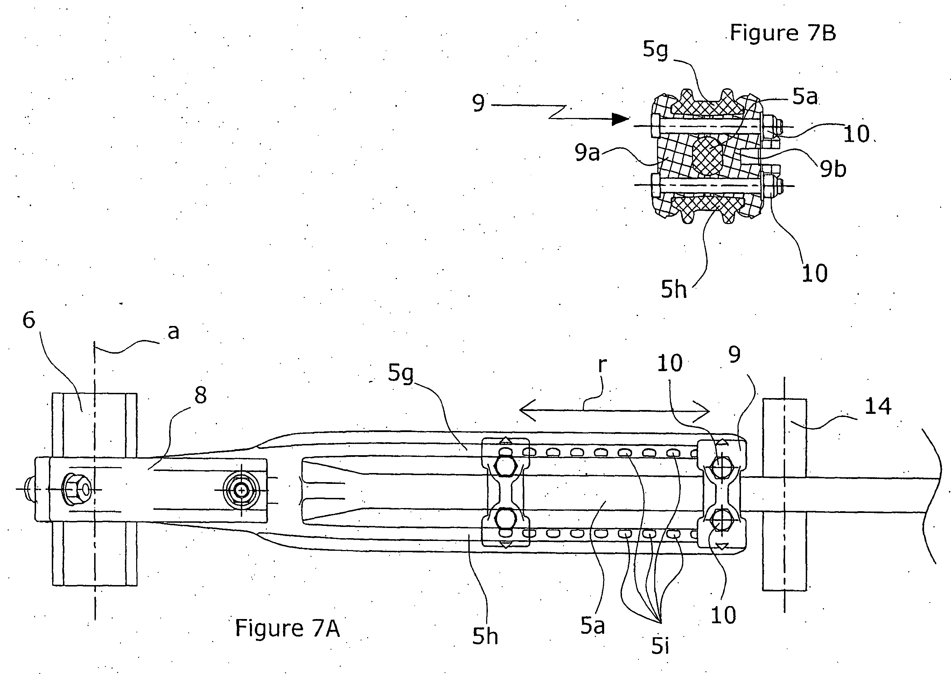

D'autre part, les bords longitudinaux des tiges de rigidification 5g, 5h sont munis de crans 5i pour coopérer au calage indéréglable de la bride de rigidification 9 à l'emplacement correspondant à la raideur désirée (figure 7).

Le système de secouage des machines à vendanger selon l'invention comporte deux ensembles de secouage placés en vis-à-vis et comportant, chacun, une pluralité de secoueurs à raideur réglable réalisés de la manière décrite précédemment et espacés verticalement. Chacun de ces secoueurs 5 est fixé, d'une part, par l'intermédiaire de l'extrémité 5d de sa branche d'animation 5a, à l'arbre vertical d'actionnement 6 de l'ensemble de secouage et, d'autre part, par l'intermédiaire de l'extrémité 5e de sa branche active 5b, à l'arbre vertical fixe 8 dudit ensemble.

Selon une autre disposition caractéristique de l'invention, le châssis 7 du système de secouage de la machine est muni, de part et d'autres, de son plan longitudinal médian, d'éléments de neutralisation 12 permettant d'établir une liaison rigide démontable entre ledit châssis 7 et la branche d'animation 5a d'un ou plusieurs secoueurs de chaque ensemble, afin de rendre ces derniers inactifs et que l'ensemble des secoueurs non neutralisés corresponde à l'emplacement et à la hauteur de la zone fructifère de la vigne à récolter.

Selon un mode d'exécution avantageux, la liaison provisoire entre l'élément de neutralisation 12 et la branche d'animation 5a du secoueur 5 est réalisée par l'intermédiaire de la bride de rigidification 9, ledit élément et ladite bride étant conformés et agencés complémentairement, de sorte à permettre leur liaison détachable, au moyen d'au moins un organe de fixation et, de préférence, à l'aide d'un unique organe de fixation tel qu'une goupille 13.

La branche d'impulsion 5a est munie d'au moins un ergot de butée 5j disposé à proximité de la portion coudée 5c du secoueur, de manière que la bride 9 peut être amenée et calée contre ledit ou lesdits ergots.

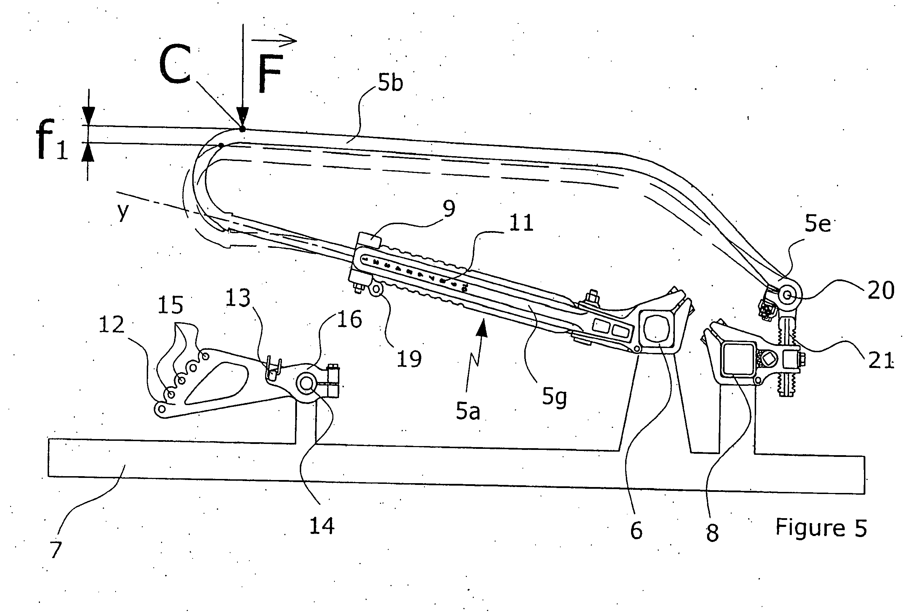

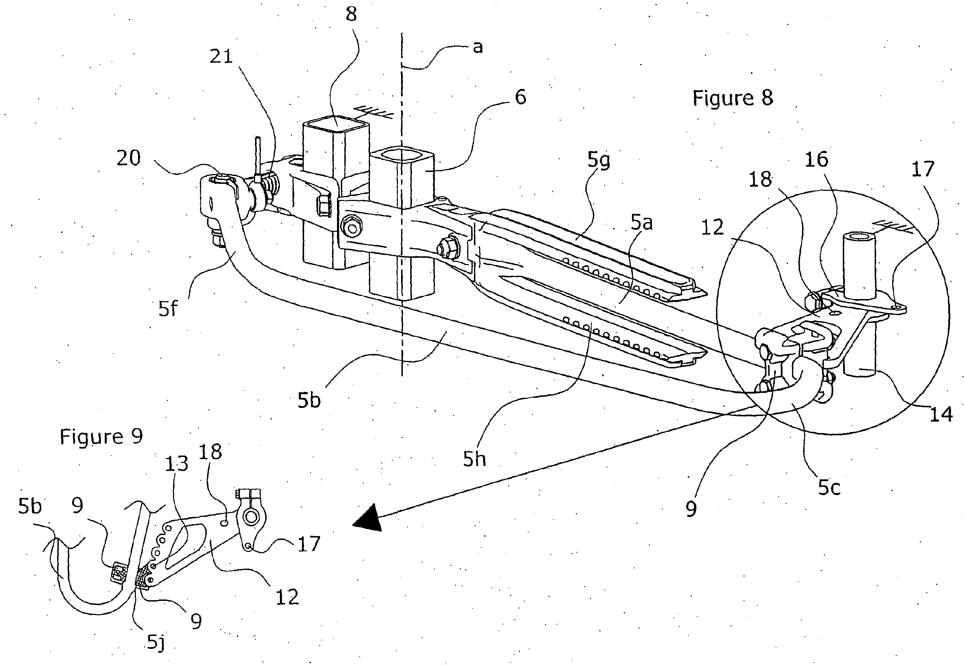

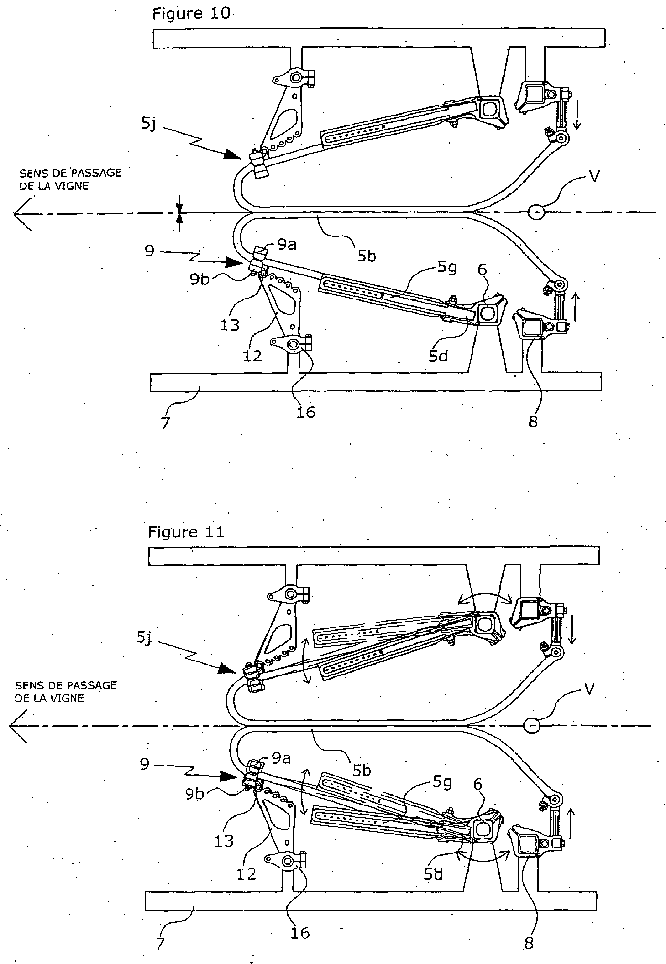

L'élément de neutralisation 12 est monté avec une aptitude de pivotement autour d'un axe vertical fixe 14 solidaire du bâti 7 de l'ensemble de secouage, de sorte qu'il peut être placé soit dans une position inactive selon laquelle il se trouve écarté du secoueur 5 (figure 5), soit dans une position active suivant laquelle il se trouve rattaché à la branche d'impulsion 5a dudit secoueur (figures 9, 10).

Avantageusement, l'élément de neutralisation 12 est constitué par une platine de forme approximativement triangulaire et le bord de cette platine opposé à son axe de pivotement 14, est pourvu d'une pluralité de trous de fixation espacés 15 disposés à des distances variables de l'axe de montage 14 de ladite platine de neutralisation.

Chaque platine de neutralisation est calée, en direction verticale, au moyen d'une chape 16 rigidement fixée par serrage sur l'axe de montage 14.

Lorsque le secoueur est en situation d'activité, l'élément de neutralisation 12 est maintenu écarté dudit secoueur par l'intermédiaire de la goupille 13 traversant des trous 17 et 18 ménagés respectivement, dans la chape 16 et dans ledit élément de neutralisation.

En position de neutralisation du secoueur 5, l'élément de neutralisation 12 est pivoté et relié à la bride 9 par l'intermédiaire de cette même goupille 13 traversant un oeillet 19 que présente chaque demi-partie 9a, 9b de ladite bride et l'un des trous 15 ménagé dans ledit élément de neutralisation.

Selon une autre disposition caractéristique, un détecteur de piquet 20 est monté à l'extrémité ou à proximité de l'extrémité avant 5e de la branche active 5b d'au moins l'un des secoueurs de chaque ensemble de secouage 4A et 4B de préférence sur le secoueur supérieur 5' de chaque ensemble. Ce détecteur de piquets peut être constitué par un capteur de chocs connu en soi, tel que par exemple, un accéléromètre. L'extrémité avant 5e de la branche active 5b du secoueur étant fixée à l'arbre 8 par l'intermédiaire de silentblocs ® 21.

Pour effectuer un réglage de raideur d'un secoueur, il suffit de débloquer les boulons de verrouillage 10 de la bride de rigidification 9, afin de permettre aux deux demi-brides 9a, 9b, de glisser à la manière d'un vernier de pied à coulisse sur les tiges de rigidification 5g, 5h. Le fait d'approcher la bride de rigidification de l'axe de rotation de l'arbre de secouage 6, et selon la course de réglage r, allonge artificiellement la partie flexible de la branche d'animation 5a du secoueur 5 et, de ce fait, la rend plus souple à la flexion (figures 5 et 6).

Quand la bride de réglage 9 est en position la plus éloignée de l'axe de rotation a de l'arbre de secouage 6 et que l'on applique, par exemple, un effort F en un point C du secoueur 5, il en résulte une flèche de flexion f1. Par contre, lorsque la bride de réglage de raideur 9 est en position la plus proche de l'axe de rotation a de l'arbre de secouage 6 et que l'on applique le même effort F au point C du secoueur 5, il en résulte une flèche de flexion f2 plus importante que la précédente flèche f1, car la raideur est moins importante.

Pour rendre le secoueur 5 inactif, le principe est simple : de la même manière que précédemment, il suffit de débloquer les boulons de fixation 10, afin de permettre aux deux demi-brides 9a et 9b de glisser le long de la branche d'animation 5a et de repositionner ensuite lesdites demi-brides en dehors de la zone couverte par les tiges de rigidification 5g, 5h, à proximité de la portion coudée 5c du secoueur 5, contre les deux ergots de positionnement 5j. Une fois la bride 9 positionnée et calée, la goupille 13 reliant la chape 16 et la platine de neutralisation 12 est retirée et cette dernière est pivotée et fixée aux demi-brides 9A, 9B à l'aide de cette même goupille 13. Au moment du verrouillage de la platine de neutralisation 12 sur la bride 9, il est possible de choisir une position plus ou moins espacée entre la zone active 5b du secoueur gauche et droite. Pour ce faire et comme indiqué précédemment, la platine de neutralisation 12 comporte une pluralité de trous de fixation 15 qui permettent plusieurs positions d'ouverture entre les secoueurs verrouillés. Il y a autant de positions de réglage possibles qu'il y a de trous 15 dans la platine 12.

Apres cette opération, les secoueurs neutralisés sont toujours animés par l'arbre de secouage 6, mais étant donné que la portion flexible de la branche d'animation 5a est rigidement fixée au châssis 7, par l'intermédiaire de la platine de neutralisation 12, la branche active 5b desdits secoueurs ne bouge plus.

Par conséquent, les secoueurs n'opposent aucune résistance significative à l'arbre de secouage 6, ce qui permet à celui-ci de continuer à remplir sa fonction d'animation des autres secoueurs 5 non neutralisés.

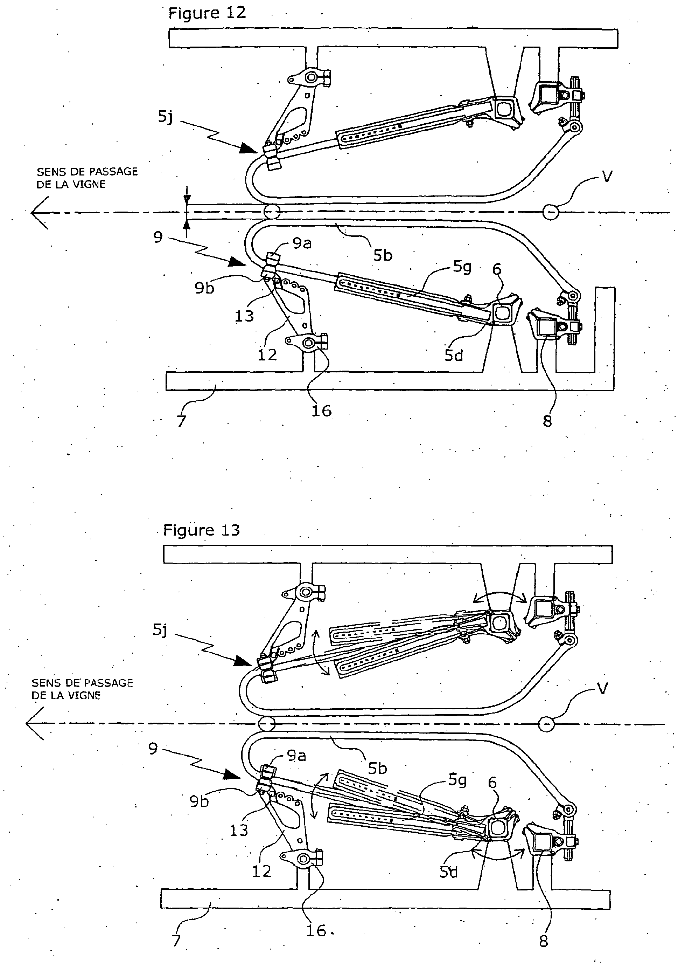

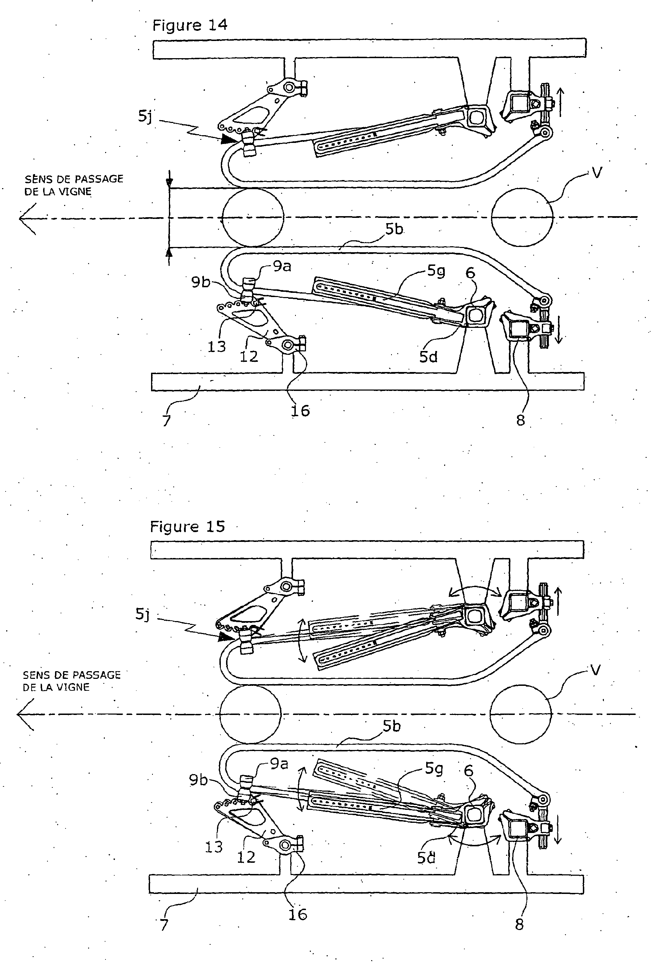

Lorsque certains secoueurs sont neutralisés, il est possible de les positionner selon plusieurs ouvertures (figures 10 à 15), afin de laisser passer la végétation et les piquets de vigne (v) de différentes tailles suivant les plantations rencontrées.

## Revendications

1. Secoueur à raideur réglable pour machines de récolte, en particulier pour machines à vendanger, du genre comportant deux ensembles de détachement des baies (4A, 4B) placés en vis-à-vis et comportant, chacun, une pluralité de secoueurs flexibles espacés verticalement, ces secoueurs (5) présentant la forme générale d'une épingle à cheveux constituée de deux branches (5a, 5b) se raccordant par une portion courbe (5c), l'extrémité (5d) de l'une de ces branches ou branche d'animation (5a) étant destinée à être reliée à un système d'actionnement, tandis que l'extrémité de l'autre (5b) desdites branches constituant la partie active du secoueur est destinée à être rattachée à un support fixe, **caractérisé en ce que** la branche d'animation (5a) est munie d'un moyen (5g-5h-9) permettant de modifier le degré de raideur ou flexibilité de celle-ci sur au moins une portion de sa longueur, et, de la sorte, de régler le degré de raideur ou flexibilité de l'ensemble du secoueur.

2. Secoueur à raideur réglable selon la revendication 1, **caractérisé en ce que** le moyen permettant de modifier la longueur de la portion flexible de la branche d'animation (5a), comprend, d'une part, au moins une tige de rigidification et, de préférence, deux tiges de rigidification (5g, 5h) s'étendant parallèlement à cette dernière à partir d'un emplacement proche de l'extrémité de fixation (5d) de ladite branche d'animation (5a), et, d'autre part, un organe d'assemblage mobile (9) permettant de relier rigidement la ou les tiges de rigidification (5g, 5h) à ladite branche d'animation (5a), en un emplacement variable de celle-ci.

3. Secoueur à raideur réglable selon la revendication 2, **caractérisé en ce que** les tiges de rigidification (5g, 5h) sont, respectivement, disposées au-dessus et au-dessous de la branche d'animation (5a) du secoueur (5), en considérant la position de montage de ce dernier dans les ensembles de récolte des machines à vendanger.

4. Secoueur à raideur réglable selon l'une des revendications 2 ou 3, **caractérisé en ce que** la ou les tiges de rigidification (5g, 5h) sont formées d'une seule pièce avec le secoueur (5).

5. Secoueur à raideur réglable selon l'une quelconque des revendications 2 à 4, **caractérisé en ce que** l'organe de rigidification mobile est constitué par une bride (9) montée avec une aptitude de déplacement le long de la branche d'animation (5a) et de la ou des tiges de rigidification (5g, 5h), ladite bride étant réalisée en deux parties (9a, 9b) assemblées à l'aide d'organes de serrage, par exemple au moyen de boulons (10).

6. Secoueur à raideur réglable selon l'une quelconque des revendications 2 à 5, **caractérisé en ce que** la face supérieure de la tige de rigidification supérieure (5g) comporte une graduation (11) répartie le long de ladite face.

7. Secoueur à raideur réglable selon l'une quelconque des revendications 2 à 6, **caractérisé en ce que** les bords longitudinaux des tiges de rigidification (5g, 5h) sont munies de crans (5i) pour coopérer au calage indéréglable de la bride de rigidification (9) à l'emplacement correspondant à la raideur désirée.

8. Machine de récolte de baies, en particulier machine à vendanger, du genre comprenant deux ensembles de secouage (4A, 4B) placés en vis-à-vis et comportant, chacun, une pluralité de secoueurs à raideur réglable (5) espacés verticalement et réalisés selon l'une quelconque des revendications 1 à 7, chacun de ces secoueurs (5) étant fixé, d'une part, par l'intermédiaire de l'extrémité (5d) de sa branche d'animation (5a), à l'arbre d'actionnement (6) de l'ensemble de secouage (4A ou 4B) et, d'autre part, par l'intermédiaire de l'extrémité (5e) de sa branche active (5b), à l'arbre vertical fixe (8) dudit ensemble.

9. Machine de récolte de baies, en particulier machine à vendanger, selon la revendication 8, **caractérisée en ce que** le châssis (7) du système de secouage de la machine est muni, de part et d'autre de son plan longitudinal médian, d'éléments de neutralisation (12) permettant d'établir une liaison rigide démontable entre ledit châssis (7) et la branche d'animation (5a) d'un ou plusieurs secoueurs (5) de chaque ensemble (4A, 4B), afin de rendre lesdits secoueurs inactifs et que l'ensemble des secoueurs non neutralisés corresponde à l'emplacement et à la hauteur de la zone fructifère de la vigne à récolter.

10. Machine de récolte de baies, en particulier machine à vendanger, selon la revendication 9, **caractérisée en ce que** l'élément de neutralisation (12) et la bride de réglage de raideur (9) sont conformés et agencés de manière complémentaire, de sorte à permettre leur liaison détachable, au moyen, d'au moins, un organe de fixation (13).

11. Machine de récolte de baies, en particulier machine à vendanger selon la revendication 10, **caractérisée en ce que** la branche d'animation (5a) du secoueur (5) est munie d'au moins un ergot de butée (5j) disposé à proximité de la portion coudée (5c) dudit secoueur et contre lequel peut être amenée et calée la bride de réglage de raideur (9).

12. Machine de récolte de baies, en particulier machine à vendanger selon l'une quelconque des revendications 9 à 11, **caractérisée en ce que** l'élément de neutralisation (12) est monté avec une aptitude de pivotement sur un axe vertical fixe (14) et il peut être placé dans une position inactive selon laquelle il se trouve écarté du secoueur (5) ou dans une position active suivant laquelle il se trouve rattaché à la branche d'animation (5a) dudit secoueur.

13. Machine de récolte de baies, en particulier machine à vendanger selon l'une quelconque des revendications 9 à 12, **caractérisée en ce que** l'élément de neutralisation (12) est constitué par une platine de forme approximativement triangulaire et le bord de cette platine opposé à son axe d'articulation (14) est pourvu d'une pluralité de trous de fixation espacés (15) disposés à des distances variables de l'axe de montage de ladite platine de neutralisation sur le bâti de l'ensemble de secouage.

14. Machine de récolte de baies, en particulier machine à vendanger selon l'une quelconque des revendications 8 à 13, **caractérisée en ce qu'**un détecteur de piquet (20) est monté à l'extrémité ou à proximité de l'extrémité avant (5e) de la branche active (5b) d'au moins l'un des secoueurs de chaque ensemble de secouage (4A et 4B).

15. Machine de récolte de baies, en particulier machine à vendanger, selon la revendication 14, **caractérisée en ce que** le détecteur de piquets (20) est monté sur le secoueur supérieur (5') de chaque ensemble de secouage (4A, 4B).

16. Machine de récolte de baies, en particulier machine à vendanger, selon l'une des revendications 14 ou 15, **caractérisée en ce que** les détecteurs de piquets (20) sont constitués par des capteurs de chocs connus en soi, par exemple par des accéléromètres, l'extrémité avant (5e) de la branche active (5b) des secoueurs munis d'un détecteur de piquets (20) étant reliée aux arbres fixes (8) des ensembles de secouage (4A, 4B) par l'intermédiaire de silentblocs ® (21).

## Claims

1. An adjustable-stiffness shaker for harvesting machines, in particular for grape harvesting machines, of the kind comprising two berry detachment assemblies (4A, 4B) placed in mutually facing relationship and each comprising a plurality of vertically spaced flexible shakers, said shakers (5) being in the general shape of a hairpin formed by two limbs (5a, 5b) connected by a curved portion (5c), the end (5d) of one of said limbs or the activation limb (5a) being intended to be connected to an actuating system while the end of the other (5b) of said limbs constituting the active portion of the shaker is intended to be attached to a fixed support, **characterised in that** the activation limb (5a) is provided with a means (5g-5h-9) permitting modification of the degree of stiffness or flexibility thereof over at least a portion of its length and **in that** way regulation of the degree of stiffness or flexibility of the whole of the shaker.

2. An adjustable-stiffness shaker according to claim 1 **characterised in that** the means permitting modification of the length of the flexible portion of the activation limb (5a) comprises on the one hand at least one stiffening rod and preferably two stiffening rods (5g, 5h) extending parallel to the latter from a location close to the fixing end (5d) of said activation limb (5a) and on the other hand a movable assembly member (9) permitting the stiffening rod or rods (5g, 5h) to be rigidly connected to said activation limb (5a) at a variable location thereof.

3. An adjustable-stiffness shaker according to claim 2 **characterised in that** the stiffening rods (5g, 5h) are respectively disposed above and below the activation limb (5a) of the shaker (5) considering the mounting position thereof in the harvesting assemblies of the grape harvesting machines.

4. An adjustable-stiffness shaker according to one of claims 2 and 3 **characterised in that** the stiffening rod or rods (5g, 5h) are formed in one piece with the shaker (5).

5. An adjustable-stiffness shaker according to any one of claims 2 to 4 **characterised in that** the movable stiffening member is formed by a flange (9) mounted displaceably along the activation limb (5a) and the stiffening rod or rods (5g, 5h), said flange being made in two parts (9a, 9b) which are assembled by means of clamping members, for example by means of bolts (10).

6. An adjustable-stiffness shaker according to any one of claims 2 to 5 **characterised in that** the upper face of the upper stiffening rod (5g) comprises a graduation (11) distributed along said face.

7. An adjustable-stiffness shaker according to any one of claims 2 to 6 **characterised in that** the longitudinal edges of the stiffening rods (5g, 5h) are provided with notches (5i) for co-operating in non-deadjustable fixing of the stiffening flange (9) at the location corresponding to the desired stiffness.

8. A berry harvesting machine, in particular a grape harvesting machine, of the kind comprising two shaking assemblies (4A, 4B) placed in mutually facing relationship and each comprising a plurality of vertically spaced adjustable-stiffness shakers (5) according to any one of claims 1 to 7, each of said shakers (5) being fixed on the one hand by way of the end (5d) of its activation limb (5a) to the actuating shaft (6) of the shaking assembly (5A or 5B) and on the other hand by way of the end (5e) of its active limb (5b) to the fixed vertical shaft (8) of said assembly.

9. A berry harvesting machine, in particular a grape harvesting machine, according to claim 8 **characterised in that** the chassis (7) of the shaking system of the machine is provided on respective sides of its longitudinal median plane with neutralisation elements (12) making it possible to establish a removable rigid connection between said chassis (7) and the activation limb (5a) of one or more shakers (5) of each assembly (4A, 4B) to make said shakers inactive and so that the assembly of the shakers which are not neutralised corresponds to the location and the height of the fruit-bearing region of the vine to be harvested.

10. A berry harvesting machine, in particular a grape harvesting machine, according to claim 9 **characterised in that** the neutralisation element (12) and the stiffness adjusting flange (9) are shaped and arranged in complementary fashion so as to permit their detachable connection by means of at least one fixing member (13).

11. A berry harvesting machine, in particular a grape harvesting machine, according to claim 10 **characterised in that** the activation limb (5a) of the shaker (5) is provided with at least one abutment lug (5j) disposed in the proximity of the curved portion (5c) of said shaker and against which the stiffness-adjusting flange (9) can be moved and fixed.

12. A berry harvesting machine, in particular a grape harvesting machine, according to any one of claims 9 to 11 **characterised in that** the neutralisation element (12) is mounted pivotably about a fixed vertical axis (14) and it can be placed in an inactive position in which it is spaced from the shaker (5) or in an active position in which it is connected to the activation limb (5a) of said shaker.

13. A berry harvesting machine, in particular a grape harvesting machine, according to any one of claims 9 to 12 **characterised in that** the neutralisation element (12) is formed by a plate member of approximately triangular shape and the edge of said plate member that is opposite to its pivot axis (14) is provided with a plurality of spaced fixing holes (15) disposed at variable distances from the mounting axis of said neutralisation plate member on the frame structure of the shaking assembly.

14. A berry harvesting machine, in particular a grape harvesting machine, according to any one of claims 8 to 13 **characterised in that** a post detector (20) is mounted at the end or in the proximity of the front end (5e) of the active limb (5b) of at least one of the shakers of each shaking assembly (4A and 4B).

15. A berry harvesting machine, in particular a grape harvesting machine, according to claim 14 **characterised in that** the post detector (20) is mounted on the upper shaker (5') of each shaking assembly (4A, 4B).

16. A berry harvesting machine, in particular a grape harvesting machine, according to either one of claims 14 and 15 **characterised in that** the post detectors (20) are formed by per se known shock sensors, for example accelerometers, the front end (5e) of the active limb (5b) of the shakers which are provided with a post detector (20) being connected to the fixed shafts (8) of the shaking assemblies (4A, 4B) by way of Silentblocs^{®} (21).

## Patentansprüche

1. Schüttler mit einstellbarer Steifigkeit für Erntemaschinen, insbesondere für Traubenerntemaschinen, von der Art, die zwei Einheiten zum Ablösen der Beeren (4A, 4B) aufweist, die einander gegenüber angeordnet sind und jede eine Vielzahl von elastischen Schüttlern aufweisen, die senkrecht beabstandet sind, wobei diese Schüttler (5) die allgemeine Form einer Haarnadel haben, die aus zwei Schenkeln (5a, 5b) besteht, die sich über einen gekrümmten Abschnitt (5c) vereinen, wobei das Ende (5d) eines dieser Schenkel oder Antriebsschenkel (5a) zur Verbindung mit einem Betätigungssystem bestimmt ist, während das Ende des anderen (5b) der Schenkel den aktiven Teil des Schüttlers bildet und zur Befestigung an einem ortsfesten Träger bestimmt ist, **dadurch gekennzeichnet, dass** der Antriebsschenkel (5a) mit einer Einrichtung (5g-5h-9) versehen ist, die es ermöglicht, seinen Steifigkeitsgrad oder Elastizitätsgrad über mindestens einen Abschnitt seiner Länge zu verändern, und so den Steifigkeitsgrad oder Elastizitätgrad der Gesamtheit des Schüttlers zu regeln.

2. Schüttler mit einstellbarer Steifigkeit nach Anspruch 1, **dadurch gekennzeichnet, dass** die Einrichtung, die es ermöglicht, die Länge des elastischen Abschnitts des Antriebsschenkels (5a) zu verändern, einerseits mindestens eine Versteifungsstange, und vorzugsweise zwei Versteifungsstangen (5g, 5h), die sich parallel zu letzterem ausgehend von einem Standort nahe dem Befestigungsende (5d) des Antriebsschenkels (5a) erstrecken, und andererseits ein bewegliches Zusammenbauorgan (9) enthält, das es ermöglicht, die Versteifungsstange(n) (5g, 5h) steif mit dem Antriebsschenkel (5a) an einem variablem Standort von diesem zu verbinden.

3. Schüttler mit einstellbarer Steifigkeit nach Anspruch 2, **dadurch gekennzeichnet, dass** die Versteifungsstangen (5g, 5h) jeweils über bzw. unter dem Antriebsschenkel (5a) des Schüttlers (5) angeordnet sind, unter Berücksichtigung der Montagestellung dieses letzteren in den Ernteeinheiten der Traubenerntemaschinen.

4. Schüttler mit einstellbarer Steifigkeit nach einem der Ansprüche 2 oder 3, **dadurch gekennzeichnet, dass** die Versteifungsstange(n) (5g, 5h) aus einem Stück mit dem Schüttler (5) geformt sind.

5. Schüttler mit einstellbarer Steifigkeit nach einem der Ansprüche 2 bis 4, **dadurch gekennzeichnet, dass** das bewegliche Versteifungsorgan aus einem Flansch (9) besteht, der mit einer Fähigkeit der Verschiebung entlang dem Antriebsschenkel (5a) und der Versteifungsstange(n) (5g, 5h) montiert ist, wobei der Flansch aus zwei Teilen (9a, 9b) besteht, die mit Hilfe von Klemmorganen zusammengebaut werden, zum Beispiel mittels Bolzen (10).

6. Schüttler mit einstellbarer Steifigkeit nach einem der Ansprüche 2 bis 5, **dadurch gekennzeichnet, dass** die Oberseite der oberen Versteifungsstange (5g) eine Gradeinteilung (11) aufweist, die entlang der Seite verteilt ist.

7. Schüttler mit einstellbarer Steifigkeit nach einem der Ansprüche 2 bis 6, **dadurch gekennzeichnet, dass** die Längsränder der Versteifungsstangen (5g, 5h) mit Kerben (5i) versehen sind, um am betriebssicheren Einstellen des Versteifungsflanschs (9) an dem der gewünschten Steifigkeit entsprechenden Standort mitzuwirken.

8. Beerenerntemaschine, insbesondere Traubenerntemaschine von der Art, die zwei Schütteleinheiten (4A, 4B) aufweist, die einander gegenüber angeordnet sind und jede eine Vielzahl von elastischen Schüttlern mit einstellbarer Steifigkeit (5) aufweisen, die senkrecht beabstandet und gemäß einem der Ansprüche 1 bis 7 hergestellt sind, wobei jeder dieser Schüttler (5) einerseits über das Ende (5d) seines Antriebsschenkels (5a) an der Betätigungswelle (6) der Schütteleinheit (4A oder 4B) und andererseits mittels des Endes (5e) seines aktiven Schenkels (5b) an der ortsfesten senkrechten Welle (8) der Einheit befestigt ist.

9. Beerenerntemaschine, insbesondere Traubenerntemaschine nach Anspruch 8, **dadurch gekennzeichnet, dass** der Gestellrahmen (7) des Schüttelsystems der Maschine zu beiden Seiten seiner Längsmittelebene mit Neutralisierungselementen (12) versehen ist, die es ermöglichen, eine steife, ausbaubare Verbindung zwischen dem Gestellrahmen (7) und dem Antriebsschenkel (5a) eines oder mehrerer Schüttler (5) jeder Einheit (4A, 4B) aufzubauen, um die Schüttler inaktiv zu machen, und dass die Gesamtheit der nicht neutralisierten Schüttler dem Standort und der Höhe der fruchttragenden Zone der zu erntenden Rebe entspricht.

10. Beerenerntemaschine, insbesondere Traubenerntemaschine nach Anspruch 9, **dadurch gekennzeichnet, dass** das Neutralisierungselement (12) und der Steifigkeitseinstellflansch (9) komplementär gestaltet und angeordnet sind, um ihre lösbare Verbindung mittels mindestens eines Befestigungsorgans (13) zu erlauben.

11. Beerenerntemaschine, insbesondere Traubenerntemaschine nach Anspruch 10, **dadurch gekennzeichnet, dass** der Antriebsschenkel (5a) des Schüttlers (5) mit mindestens einem Anschlagzapfen (5j) versehen ist, der in der Nähe des geknickten Abschnitts (5c) des Schüttlers angeordnet ist und gegen den der Steifigkeitseinstellflansch (9) gebracht und eingespannt werden kann.

12. Beerenerntemaschine, insbesondere Traubenerntemaschine nach einem der Ansprüche 9 bis 11, **dadurch gekennzeichnet, dass** das Neutralisierungselement (12) mit einer Fähigkeit des Schwenkens um eine ortsfeste senkrechte Achse (14) montiert ist und in einer inaktiven Stellung, in der es sich in Abstand zum Schüttler (5) befindet, oder in einer aktiven Stellung angeordnet werden kann, gemäß der es am Antriebsschenkel (5a) des Schüttlers befestigt ist.

13. Beerenerntemaschine, insbesondere Traubenerntemaschine nach einem der Ansprüche 9 bis 12, **dadurch gekennzeichnet, dass** das Neutralisierungselement (12) aus einer Platte von in etwa Dreiecksform besteht und der Rand dieser Platte entgegengesetzt zu ihrer Gelenkachse (14) mit einer Vielzahl von Befestigungslöchern (15) versehen ist, die in variablen Abständen zur Montageachse der Neutralisierungsplatte auf dem Gestell der Schütteleinheit angeordnet sind.

14. Beerenerntemaschine, insbesondere Traubenerntemaschine nach einem der Ansprüche 8 bis 13, **dadurch gekennzeichnet, dass** ein Pfahl-Detektor (20) am Ende oder in der Nähe des vorderen Endes (5e) des aktiven Schenkels (5b) mindestens eines der Schüttler jeder Schütteleinheit (4A und 4B) montiert ist.

15. Beerenerntemaschine, insbesondere Traubenerntemaschine nach Anspruch 14, **dadurch gekennzeichnet, dass** der Pfahl-Detektor (20) auf dem oberen Schüttler (5') jeder Schütteleinheit (4A, 4B) montiert ist.

16. Beerenerntemaschine, insbesondere Traubenerntemaschine nach einem der Ansprüche 14 oder 15, **dadurch gekennzeichnet, dass** die Pfahl-Detektoren (20) aus an sich bekannten Aufprallsensoren bestehen, zum Beispiel aus Beschleunigungsmessern, wobei das vordere Ende (5e) des aktiven Schenkels (5b) der mit einem Pfahl-Detektor (20) versehenen Schüttler mit dem ortsfesten Wellen (8) der Schütteleinheiten (4A, 4B) über Silentblöcke^{®} (21) verbunden ist.
